# EUROPÄISCHE PATENTSCHRIFT

(11) **EP 2 756 145 B1**
(45) Veröffentlichungstag und Bekanntmachung des Hinweises auf die Patenterteilung: **15.01.2020**
(21) Anmeldenummer: 12766010.8
(22) Anmeldetag: 05.09.2012
(51) Int. Cl.: H02K 1/17, H02K 7/08, H02K 7/116

(54) **ANTRIEBSEINRICHTUNG**
DRIVE DEVICE
DISPOSITIF D'ENTRAÎNEMENT

(30) Priorität: 12.09.2011 DE 102011082540
(43) Veröffentlichungstag der Anmeldung: 23.07.2014
(73) Patentinhaber: Stabilus GmbH, 56070 Koblenz (DE)
(72) Erfinder: KESSLER, Jürgen, 56410 Montabaur (DE); RITTER, Andreas, 56206 Hilgert (DE)
(74) Vertreter: Weickmann & Weickmann PartmbB
(86) Internationale Anmeldenummer: PCT/EP2012/067304
(87) Internationale Veröffentlichungsnummer: WO 2013/037683

(56) Entgegenhaltungen:
- EP-A1- 0 017 524
- EP-A1- 1 655 513
- EP-A2- 1 300 923
- DE-A1- 3 726 413
- FR-A1- 2 430 122
- US-A- 5 481 148
- US-A1- 2007 179 006
- US-A1- 2008 060 273
- US-A1- 2011 068 721

## Beschreibung

Die Erfindung betrifft eine Antriebseinrichtung, umfassend ein erstes Gehäuseteil mit einer Achse, das mit einem feststehenden Basisteil oder mit einem bewegbaren Bauteil verbindbar ist, ein zum ersten Gehäuseteil im Wesentlichen koaxial angeordnetes zweites Gehäuseteil, das mit dem jeweils anderen Teil, d.h. dem bewegbaren Bauteil oder dem feststehenden Basisteil, verbindbar ist und das am ersten Gehäuseteil mittelbar oder unmittelbar in Achsrichtung relativ zu diesem verlagerbar geführt ist, und eine in dem ersten Gehäuseteil aufgenommene Antriebseinheit mit einer Motorbaugruppe zur Herbeiführung einer Relativverlagerungsbewegung von erstem Gehäuseteils und zweitem Gehäuseteil, wobei die Motorbaugruppe einen Rotor mit einer Rotorwelle, zwei Lagerelemente zur Lagerung der beiden Enden der Rotorwelle und zwei an den Lagerelementen gehaltene Permanentmagnetschalen aufweist.

Derartige Antriebseinrichtungen sind allgemein bekannt. Sie werden insbesondere in Kraftfahrzeugen beispielsweise zum Schließen und Öffnen von Motorhauben, Heckklappen, Kofferraumdeckeln, Türen und dergleichen schwenkbaren Elementen eingesetzt. Eine gattungsgemäße Antriebseinrichtung ist beispielsweise in der DE 10 2007 054 448 B3 der Anmelderin offenbart. Die Antriebseinheit derartiger Antriebseinrichtungen verfügt üblicherweise neben der Motorbaugruppe auch noch über eine Getriebebaugruppe, welche die Drehbewegung des Rotors der Motorbaugruppe untersetzt und an eine Stellbaugruppe der Antriebseinrichtung, beispielsweise einen Spindeltrieb, weiterleitet, der hieraus die Relativverlagerungsbewegung von erstem Gehäuseteil und zweitem Gehäuseteil ableitet. Die beiden Gehäuseteile können dabei beispielsweise und können auch erfindungsgemäß rohrförmig ausgebildet sein, vorzugsweise als hohle Kreiszylinder.

Auf diesem technischen Gebiet besteht stets Bedarf nach einer Reduzierung der Herstellungskosten, einer Erhöhung der Leistungsfähigkeit und einer Reduzierung der Länge der Antriebseinheit. Der Wunsch nach einer Reduzierung der Länge der Antriebseinheit rührt dabei davon her, dass die Verstelllänge der Antriebseinrichtung, d.h. die Differenz zwischen ihren Längen im vollständig ausgefahrenen Zustand und im vollständig verkürzten Zustand, bei vorgegebener Einbaulänge der Antriebseinrichtung im vollständig verkürzten Zustand von der zum Verlängern nicht nutzbaren Baulänge der Antriebseinheit abhängt.

Außerdem ist aus der US 2008/060273 A1 eine Antriebseinrichtung bekannt, die ein erstes Gehäuseteil mit einer Achse umfasst, das mit einem feststehenden Basisteil oder mit einem bewegbaren Bauteil verbindbar ist, sowie ein zum ersten Gehäuseteil im Wesentlichen koaxial angeordnetes zweites Gehäuseteil, das das mit dem jeweils anderen aus dem bewegbaren Bauteil und dem feststehenden Bauteil verbindbar ist und das am ersten Gehäuseteil geführt ist. Die Antriebseinrichtung umfasst ferner ein in dem ersten Gehäuseteil aufgenommene Antriebseinrichtung mit einer Motorbaugruppe zur Herbeiführung einer Relativverlagerungsbewegung des ersten Gehäuseteils und des zweiten Gehäuseteils, wobei die Motorbaugruppe einen Rotor mit einer Rotorwelle, zwei Lagerelemente zur Lagerung der beiden Enden der Rotorwelle und zwei Permanenmagnetschalen umfasst, wobei der Rotor, die beiden Lagerelemente und die beiden Permanenmagnetschalen unmittelbar in dem ersten Gehäuseteil aufgenommen sind und wobei das erste Gehäuseteil zumindest in einem der Motorbaugruppe zugeordneten Längenabschnitt aus einem magnetisierbaren Material gefertigt ist.

Es ist daher Aufgabe der vorliegenden Erfindung, die Antriebseinrichtung der gattungsgemäßen Art in dieser Hinsicht zu verbessern.

Nach einem ersten Gesichtspunkt der Erfindung wird diese Aufgabe durch eine Antriebseinrichtung der gattungsgemäßen Art gelöst, bei welcher die von dem Rotor, den beiden Lagerelementen und den beiden Permanentmagnetschalen gebildete Einheit unmittelbar in dem ersten Gehäuseteil aufgenommen ist, und dass das erste Gehäuseteil zumindest in einem der Motorbaugruppe zugeordneten Längenabschnitt aus einem magnetisierbaren Material, vorzugsweise Stahl, gefertigt ist. Der Ausdruck "unmittelbar aufgenommen" bedeutet dabei im Zusammenhang mit der vorliegenden Erfindung, dass die Motorbaugruppe selbst frei von die beiden Permanentmagnetschalen magnetisch verbindenden Jochelementen ist. Die Funktion des magnetischen Rückschlusses wird erfindungsgemäß durch das zumindest in dem der Motorbaugruppe zugeordneten Längenabschnitt aus einem magnetisierbaren Material gefertigte erste Gehäuseteil übernommen. Die Motorbaugruppe als solche bildet also keinen funktionstüchtigen Elektromotor. Dieser entsteht erst durch die Aufnahme der Motorbaugruppe in dem ersten Gehäuseteil.

Durch den Wegfall des für den magnetischen Rückschluss verantwortlichen Poltopfs der bislang als funktionsfähige Gesamteinheit verbauten Elektromotoren wird bei - im Vergleich zu den Antriebseinrichtungen des Standes der Technik - gleichem Außendurchmesser radialer Bauraum eingespart, der für die Permanentmagnetschalen genutzt werden kann. Diese können daher bei gleicher Baulänge des Elektromotors ein größeres Volumen einnehmen. Dies wiederum ermöglicht es, sie ohne Verlust an Nenndrehmoment des Elektromotors aus einem kostengünstigeren Magnetmaterial geringerer Magnetfeldenergiedichte herzustellen, sie beispielsweise als Ferritmagneten auszubilden. Sind die Permanentmagnetschalen hingegen aus einem Hochleistungsmagnetmaterial gefertigt, d.h. einem Material hoher Magnetfeldenergiedichte, sind sie also beispielsweise wie die Permanentmagnetschalen der herkömmlichen Antriebseinrichtungen als Neodymmagneten ausgebildet, so kann die radiale Bauraumvergrößerung zur Bereitstellung eines höheren Nenndrehmoments oder/und zur Einsparung von Baulänge genutzt werden. Es ist jedoch auch möglich, die Antriebseinrichtung mit einem geringeren Durchmesser auszubilden.

Die erfindungsgemäße Bauweise der Antriebseinrichtung hat aber noch einen weiteren Vorteil: Wie erwähnt wurden die Elektromotoren bislang als funktionsfähige Gesamteinheit verbaut. Sie wurden aber nicht nur als funktionsfähige Gesamteinheit verbaut, sondern auch von einem Zulieferunternehmen als funktionsfähige Gesamteinheit bezogen. Dies bedingte, dass die Elektromotoren von dem Zulieferunternehmen auf ihre Funktionstüchtigkeit getestet wurden, was sich selbstverständlich im Preis der Elektromotoren niederschlug. Nach der fertigen Montage der Antriebseinrichtungen wurden diese aber dann nochmals auf ihre Funktionstüchtigkeit getestet, nämlich zusammen mit den anderen Baugruppen als fertig montierte Antriebseinrichtung. Da die Elektromotoren erfindungsgemäß nunmehr erst nach der fertigen Montage der Antriebseinrichtungen funktionsfähig sind, nämlich nach dem Einführen in das erste Gehäuseteil, entfällt das erstgenannte Testen der Elektromotoren als solche. Dies wirkt sich vorteilhaft auf die Herstellungskosten der erfindungsgemäßen Antriebseinrichtung aus.

Um die korrekte Positionierung der Permanentmagnetschalen in Umfangsrichtung um die Rotorwelle in einfacher Weise sicherstellen zu können, wird in Weiterbildung der Erfindung vorgeschlagen, dass wenigstens eines der Lagerelemente wenigstens einen axialen Ansatz aufweist, der zwischen die Permanentmagnetschalen hineinragt. Vorteilhafterweise sind zwei derartige axiale Ansätze vorgesehen, die einander in Umfangsrichtung diametral gegenüber liegen. Ferner können vorzugsweise beide Lagerelemente ein oder zwei derartige axiale Ansätze aufweisen.

Um verhindern zu können, dass die Permanentmagnetschalen dann, wenn der Rotor, die Lagerelemente und die Permanentmagnetschalen der Motorbaugruppe zu einer Montageeinheit zusammengefügt worden sind, wieder von dieser Montageeinheit abfallen, wird ferner vorgeschlagen, dass wenigstens ein Lagerelement wenigstens einen Haltevorsprung für wenigstens eine der Permanentmagnetschalen, vorzugsweise beide Permanentmagnetschalen, aufweist, wobei der wenigstens eine Haltevorsprung mit der ihm zugeordneten Permanentmagnetschale vorzugsweise zumindest in radialer Richtung formschlüssig zusammenwirkt. Der wenigstens eine Haltevorsprung kann beispielsweise seitlich an dem wenigstens einen axialen Ansatz angeformt sein. Zusätzlich oder alternativ ist es jedoch auch möglich, dass das wenigstens eine Lagerelement stirnseitig wenigstens einen Haltevorsprung für wenigstens eine der Permanentmagnetschalen, vorzugsweise beide Permanentmagnetschalen, aufweist. Ferner kann der wenigstens eine Haltevorsprung beispielsweise stufen- oder keilförmig ausgebildet sein.

Bei der keilförmigen Ausbildung ist es insbesondere für einen an der Stirnseite des Lagerelements vorgesehenen Haltevorsprung vorteilhaft, wenn die Keilfläche des Haltevorsprungs mit einer zugeordneten Gegenkeilfläche der wenigstens einen Permanentmagnetschale zusammenwirkt, die sich vorzugsweise über einen an die Außenfläche der wenigstens einen Permanentmagnetschale angrenzenden Höhenabschnitt der Permanentmagnetschale erstreckt, wobei sich vorzugsweise sowohl die Keilfläche als auch die Gegenkeilfläche in einer auf das jeweils andere axiale Längsende der wenigstens einen Permanentmagnetschale zu weisenden Richtung zunehmend nach radial außen erstrecken. Um die wenigstens eine Permanentmagnetschale an dem Lagerelement in einer definierten Radiallage halten zu können, ist es ferner vorteilhaft, wenn die Permanentmagnetschale nach radial innen auf einer Stützfläche des Lagerelements aufliegt. Durch das Zusammenwirken dieser Stützfläche mit der Keilfläche kann die Permanentmagnetschale von dem Lagerelement sicher und zuverlässig gehalten werden. Die gleichen konstruktiven Maßnahmen, wie sie vorstehend für das eine axiale Längsende der Permanentmagnetschale erläutert wurden, können auch an dem anderen axialen Längsende der Permanentmagnetschale vorgesehen sein, um die Permanentmagnetschale sicher an dem zugordneten Lagerelement halten zu können.

Unabhängig von der Ausbildung des an der Stirnseite des Lagerelements vorgesehenen Haltevorsprungs ist es vorteilhaft, wenn an wenigstens einem axialen Längsende der wenigstens einen Permanentmagnetschale zwischen der Permanentmagnetschale und dem Lagerelement ein in axialer Richtung elastisch komprimierbares Ausgleichselement vorgesehen ist. Ein derartiges Ausgleichselement kann etwaige Fertigungstoleranzen bei der Herstellung der Lagerelemente und insbesondere der wenigstens einen Permanentmagnetschale in einfacher Weise ausgleichen, indem es zwischen der Permanentmagnetschale und dem Lagerelement komprimiert wird. Dies ist insbesondere dann von Vorteil, wenn beide Lagerelemente mit axialen Ansätzen ausgebildet sind, die im montierten Zustand mit ihren freien Enden aneinander anliegen. Üblicherweise können die Lagerelemente erheblich präziser gefertigt werden als die Permanentmagnetschalen, so dass durch die mit ihren axialen Ansätzen aneinander anliegenden Lagerelemente eine vorbestimmte Baulänge vorgegeben werden kann; und für den Fall, dass die Permanentmagnetschale nur mit größeren Fertigungstoleranzen hergestellt werden kann, kann dies trotz Einhalten der vorgegebenen Baulänge durch das Ausgleichselement in einfacher Weise ausgeglichen werden.

Vorteilhaft ist es insbesondere, wenn das Ausgleichselement als sich über den gesamten Umfang erstreckender Ring ausgebildet ist. Darüber hinaus braucht die elastische Komprimierbarkeit des Ausgleichselements nicht notwendigerweise eine Eigenschaft des Materials zu sein, aus dem es gefertigt ist, beispielsweise Gummi. Vielmehr kann sie zusätzlich oder alternativ auch von der Gestalt eines, beispielsweise aus Kunststoff oder Metall gefertigten, Ausgleichselements herrühren. Beispielsweise kann das Ausgleichselement wenigstens einen wellenförmigen Abschnitt umfassen, wobei das Ausgleichselement mit den Wellenbergen an dem einen Teil, Permanentmagnetschale oder Lagerelement, anliegt, während es mit den Wellentälern an dem jeweils anderen Teil, Lagerelement oder Permanentmagnetschale, anliegt. Der Begriff "Wellenform" ist dabei breit zu verstehen und soll beispielsweise auch eine Zick-Zack-Form umfassen, d.h. eine Wellenform mit scharfkantigen Wellenbergen und Wellentälern. Im Zusammenhang mit der Ausbildung von Lagerelement und Permanentmagnetschale mit Keilfläche und Gegenkeilfläche kann der wenigstens eine wellenförmige Abschnitt an die Schräge dieser Flächen ebenfalls mit schräger Wellenform ausgebildet sein. Der wenigstens eine wellenförmige Abschnitt kann beispielsweise auf der Innenseite eines in Umfangsrichtung durchgehenden, beispielsweise nicht elastisch komprimierbaren, Rings angeordnet sein.

In Verbindung mit der Ausbildung wenigstens eines Lagerelements mit wenigstens einen axialen Ansatz, der zwischen die Permanentmagnetschalen hineinragt, wird vorgeschlagen, dass zwei benachbarte wellenförmige Abschnitte des Ausgleichselements mittels eines Umfangsabschnitts des Rings verbunden sind, der im montierten Zustand radial außerhalb des axialen Ansatzes angeordnet ist, während die beiden wellenförmigen Abschnitte den beiden Seitenflächen des axialen Ansatzes in Umfangsrichtung benachbart angeordnet sind. Wenn dieser Umfangsabschnitt des Rings in radialer Richtung über an ihn angrenzende Umfangsabschnitte des Rings hervorsteht, so kann er sich beispielsweise gegen die Innenfläche des ersten Gehäuseteils anlegen und im Zusammenwirken mit anderen in analoger Weise hervorstehenden Umfangsabschnitten des Rings die Motorbaugruppe in dem ersten Gehäuseteil zentrieren.

Gemäß einem zweiten Gesichtspunkt der Erfindung kann bei einer gattungsgemäßen Antriebseinrichtung, bei welcher die Antriebseinheit ferner eine Getriebebaugruppe aufweist, weiche mit der Abtriebsseite der Motorbaugruppe verbunden ist, wobei von einer Drehbewegung der Ausgangswelle der Getriebebaugruppe die Relativverlagerungsbewegung des ersten Gehäuseteils und des zweiten Gehäuseteils abgeleitet wird, vorgesehen sein, dass das der Getriebebaugruppe nächstgelegene Lagerelement der Motorbaugruppe gleichzeitig den Gehäusedeckel der Getriebebaugruppe bildet. Hierdurch kann zum einen ein Bauteil eingespart werden, was sich vorteilhaft auf die Herstellungskosten der erfindungsgemäßen Antriebseinrichtung auswirkt. Zum anderen kann durch den Wegfall des einen Bauteils die Antriebseinheit aber auch kürzer ausgebildet werden, was eine Verlängerung des Stellwegs der Antriebseinheit ermöglicht. Da somit auch hierdurch die eingangs angeführte erfindungsgemäße Aufgabe gelöst wird, wird auch für den zweiten Gesichtspunkt der Erfindung unabhängiger Schutz angestrebt.

Zur Erleichterung des Zusammenfügens der Komponenten der von Motorbaugruppe und Getriebebaugruppe gebildeten Montageinheit wird in Weiterbildung des zweiten Gesichtspunkts der Erfindung vorgeschlagen, dass der Innendurchmesser einer zur Durchführung der Rotorwelle dienenden zentralen Öffnung des der Getriebebaugruppe nächstgelegenen Lagerelements der Motorbaugruppe zumindest gleich groß bemessen ist wie der Außendurchmesser des Eingangsritzels der Getriebebaugruppe. Beispielsweise kann als erster Montageschritt das Eingangsritzel der Getriebebaugruppe auf das abtriebsseitige Ende der Rotorwelle montiert, beispielsweise aufgepresst, werden. Anschließend können die Komponenten der Motorbaugruppe zusammengefügt werden, wobei das Eingangsritzel der Getriebeeinheit durch die entsprechend bemessene zentrale Öffnung des der Getriebebaugruppe nächstgelegenen Lagerelements hindurchgeführt wird. Sind dann auch noch die Komponenten der Getriebebaugruppe, mit Ausnahme von deren Eingangsritzel und Gehäusedeckel, zusammengesetzt worden, kann in einem letzten Montageschritt die fertig montierte Motorbaugruppe quasi als Gehäusedeckel der Getriebebaugruppe auf diese aufgesetzt werden.

In diesem Zusammenhang sei darauf hingewiesen, dass der Ausdruck "zumindest gleich groß bemessen" jedwede Ausführungsvariante umfasst, die das Hindurchführen des Eingangsritzels der Getriebebaugruppe durch die zentrale Öffnung des Lagerelement erlaubt. D.h. von diesem Ausdruck sollen insbesondere auch Ausführungen umfasst sein, die ein lediglich kurzeitiges Aufweiten der zentralen Öffnung zum Zwecke des Hindurchführens des Eingangsritzels ermöglichen.

Ein Problem, mit dem man bei Antriebseinrichtungen der gattungsgemäßen Art grundsätzlich zu kämpfen hat, ist die Geräuschentwicklung, die im Betrieb von Vibrationen der Antriebseinheit herrührt, beispielsweise weil die Motorbaugruppe und/oder die Getriebebaugruppe vibrationsbedingt gegen das erste Gehäuseteil schlagen. Zur Lösung dieses Problems wird in Weiterbildung der Erfindung vorgeschlagen, dass wenigstens einem Lagerelement oder/und der Getriebebaugruppe an ihrem von der Motorbaugruppe entfernten Ende ein Dämpfungselement zugeordnet ist. Dabei kann wenigstens ein Dämpfungselement in einer Umfangsnut aufgenommen sein. Dämpfungselemente, welche die von Motorbaugruppe und Getriebebaugruppe gebildete Montageinheit in radialer Richtung umgeben, sparen axialen Bauraum. Gleichzeitig kann der durch das Vorsehen der Dämpfungselemente entstehende und für die Minderung der Geräuschentwicklung wichtige Spalt zwischen Motorbaugruppe und Getriebebaugruppe einerseits und erstem Gehäuseteil andererseits so klein bemessen werden, dass er sich lediglich in einem tolerierbaren Maß auf das Nenndrehmoment des Elektromotors auswirkt.

Das Dämpfungselement bzw. die Dämpfungselemente kann bzw. können beispielsweise in Form eines O-Ring ausgebildet sein, der vorzugsweise aus einem gummielastischen Material gefertigt ist. Es ist jedoch auch möglich, wenigstens ein Dämpfungselement scheibenförmig oder topfförmig auszubilden. Im Hinblick auf die Reduzierung der Gesamtzahl der Komponenten der Antriebseinheit ist es ferner vorteilhaft, wenn derartige Dämpfungselemente nur an dem von der Getriebebaugruppe entfernt angeordneten Lagerelement und dem von der Motorbaugruppe entfernten Ende der Getriebebaugruppe vorgesehen sind.

In Weiterbildung der Erfindung kann wenigstens eines der Dämpfungselemente, die an dem von der Getriebebaugruppe entfernt angeordneten Lagerelement und dem von der Motorbaugruppe entfernten Ende der Getriebebaugruppe vorgesehen sind, zur Drehmomentabstützung der Motorbaugruppe oder/und der Getriebebaugruppe am ersten Gehäuseteil genutzt werden. Hierzu kann das jeweilige Dämpfungselement beispielsweise sowohl mit der Motorbaugruppe bzw. der Getriebebaugruppe als auch mit dem ersten Gehäuseteil formschlüssig in Eingriff stehen.

Wie dies an sich bekannt ist, kann auch die Motorbaugruppe der erfindungsgemäßen Antriebseinrichtung ferner eine Sensoreinheit umfassen mit einer rotorfesten Sensoruntereinheit und einer statorfesten Sensoruntereinheit. Diese Sensoreinheit dient zur Erfassung des Drehsinns des Rotors oder/und zur Erfassung der jeweiligen Drehstellung des Rotors oder/und zur Erfassung der Anzahl der bereits ausgeführten Umdrehungen des Rotors. Die Sensoreinheit kann beispielsweise wenigstens einen Hallmagneten und wenigstens eine Hallsonde umfassen. Dabei können beide Teile, Hallmagnet und Hallsonde, sowohl als rotorfeste Sensoruntereinheit als auch als statorfeste Sensoruntereinheit eingesetzt werden. Vorteilhafterweise wird jedoch der Hallmagnet als rotorfeste Sensoruntereinheit und der Hallsensor als statorfeste Sensoruntereinheit eingesetzt.

Grundsätzlich kann die Sensoreinheit an dem von der Getriebebaugruppe abgewandten Ende der Motorbaugruppe angeordnet sein, wie dies beispielsweise bei der herkömmlichen Antriebseinrichtung der Fall ist.

Um die Führung und Zugentlastung der zur Sensoreinheit führenden elektrischen Leitungen erleichtern zu können, kann die Sensoreinheit aber auch zwischen der Motorbaugruppe und der Getriebebaugruppe angeordnet sein. Hierdurch können nämlich Abschnitte, in denen die Leitungen umgelenkt bzw. zur Bereitstellung der Zugentlastung gefasst werden müssen, von den gelöteten Kontaktstellen entfernt angeordnet werden. Die elektrischen Leitungen können in diesem Fall beispielsweise in dem Spalt zwischen den Permanentmagnetschalen erfolgen, so dass kein zusätzlicher radialer Bauraum erforderlich ist. Vorteilhaft ist in diesem Fall jedoch das Vorsehen einer Trennschale in diesem Spalt, die beispielsweise mit einem oder beiden Lagerelementen einstückig ausgebildet sein kann, um einen Kontakt zwischen dem Rotor und den elektrischen Leitungen zu verhindern. Da diese Anordnung der Sensoreinheit aus dem Stand der Technik ebenfalls nicht bekannt ist, wird für sie gemäß einem dritten Gesichtspunkt der Erfindung ebenfalls unabhängiger Schutz angestrebt.

Unabhängig davon, an welchem Ende der Motorbaugruppe die Sensoreinheit angeordnet ist, ist es vorteilhaft, wenn die statorfeste Sensoruntereinheit radial außerhalb der rotorfesten Sensoruntereinheit oder/und in einer axialen Ausnehmung eines der Lagerelemente angeordnet ist. Durch diese Anordnung kann nämlich axialer Bauraum eingespart werden, der herkömmlich für die Anordnung der statorfesten Sensoruntereinheit erforderlich war. Dies kann dazu genutzt werden, um die Baulänge der Antriebseinheit zu reduzieren.

Zu ergänzen ist in diesem Zusammenhang ferner, dass die elektrischen Anschlussleitungen für die Motorbaugruppe an deren der Getriebebaugruppe zugewandtem Ende in die Motorbaugruppe eingeführt sein können. Ferner können die elektrischen Anschlussleitungen zur Motorbaugruppe, und gegebenfalls zur Sensoreinheit, von der Antriebseinrichtung in axialer Richtung weggeführt sind. Alternativ ist es jedoch auch möglich, sie in radialer Richtung von der Antriebseinrichtung wegzuführen.

Zur Vereinfachung der Herstellung der Permanentmagnetschalen kann wenigstens eine der Permanentmagnetschalen wenigstens zwei Permanentmagnetelemente umfassen, die beispielsweise getrennt voneinander an den Lagerelementen gehalten sind. Für das Halten der Permanentmagnetelemente an den Lagerelementen gilt das vorstehend zum Halten der Permanentmagnetschalen an den Lagerelementen Gesagte in analoger Weise. Insbesondere können die Lagerelemente auch axiale Ansätze umfassen, die sich zwischen zwei benachbarte Permanentmagnetelemente hinein erstrecken.

Nachzutragen ist noch, dass die Materialien, aus denen die Komponenten der Getriebebaugruppe gebildet sind, ganz allgemein aus der die Materialien Metall, vorzugsweise Stahl oder Messing, Polyamid (PA) und Polyoxymethylen (POM) umfassenden Gruppe ausgewählt sein können. Vorzugsweise kann das eingangsseitige Ritzel aus Metall, beispielsweise Stahl oder Messing, oder Polyoxymethylen, gebildet sein, können die Planetenräder aus Polyamid gebildet sein und kann das Hohlrad aus Polyoxymethylen gebildet sein. Bei einem zweistufigen Planetengetriebe kann das Eingangsritzel der zweiten Stufe aus Polyoxymethylen gebildet sein, können die Planetenräder der zweiten Stufe aus Polyamid gefertigt sein, und kann das Hohlrad der zweiten Stufe und das mit diesem vorzugsweise einstückig verbundene Ausgangsritzel aus Polyoxymethylen gefertigt sein.

Nachzutragen ist ferner, dass das erste Gehäuseteil vorzugsweise aus Metall, insbesondere Stahl, gebildet sein kann oder aus von elektrisch leitfähigem Material, beispielsweise Kohlefasern, durchsetztem Kunststoff.

Ferner kann wenigstens eines der Lagerelemente der Motorbaugruppe aus einem faserverstärkten Kunststoff gefertigt sein, wobei die Verstärkungsfasern vorzugsweise aus einem elektrisch isolierenden Material gebildet sind, beispielsweise Glasfasern sind.

Nachzutragen ist außerdem, dass das erste Gehäuseteil an seinem vom zweiten Gehäuseteil entfernten Ende durch ein Bodenstück verschlossen sein kann, wobei an dem Bodenstück ein Anschlusselement vorgesehen sein kann, das zum Verbinden mit dem feststehenden Basisteil oder mit dem bewegbaren Bauteil dient. Das Anschlusselement kann mit dem Bodenstück beispielsweise verschraubt sein.

Das Bodenstück kann beispielsweise mittels Schrauben an dem ersten Gehäuseteil befestigt sein. Alternativ ist es jedoch auch möglich, das Bodenstück mittels Knaggen oder einer Sicke an dem ersten Gehäuseteil zu befestigen. Eine besonders montagefreundliche Alternative kann schließlich darin bestehen, das Bodenstück durch Umbördeln oder Rollschließen des vom zweiten Gehäuseteil entfernten Endes des ersten Gehäuseteils auszubilden.

Nachzutragen ist schließlich auch noch, dass die Antriebseinrichtung in einer Ausbauvariante, die lediglich die Motorbaugruppe (einschließlich Sensoreinheit), die Getriebebaugruppe und die Stellbaugruppe umfasst, in ihrem vollständig verkürzten Zustand eine Länge von zwischen etwa 250 mm und etwa 480 mm aufweist, vorzugsweise eine Länge von zwischen 300 mm und 420 mm, und in ihrem vollständig ausgefahrenen Zustand eine Länge von zwischen etwa 350 mm und etwa 700 mm aufweist, vorzugsweise eine Länge von zwischen 390 mm und 640 mm. Es gibt aber auch Ausbauvarianten, die weitere Funktionsbaugruppen enthalten, beispielsweise eine Überlastkupplung, die die Antriebseinrichtung bzw. das Fahrzeug durch eine Drehmomentbegrenzung vor Beschädigung schützt, und/oder eine Bremse zur Vergrößerung der System-Hysterese der Antriebseinrichtung, insbesondere der Stellbaugruppe. Diese Ausbauvarianten bauen aufgrund der zusätzlichen Baugruppen um bis zu 30 mm, vorzugsweise um bis zu 25 mm, länger.

Die Erfindung wird im Folgenden anhand der beigefügten Zeichnung an Ausführungsbeispielen sowie nicht-erfindungsgemäßen Vergleichsbeispielen näher erläutert werden. Es stellt dar:
- Figur 1: eine perspektivische Ansicht des Hecks eines mit Vergleichsbeispielen von Antriebseinrichtungen ausgerüsteten Fahrzeugs;
- Figur 2: einen Längsschnitt eines Teils eines ersten Vergleichsbeispiels einer Antriebseinrichtung;
- Figur 3: eine Seitenansicht der Vorrichtung gemäß Figur 2, allerdings bei abgenommenem ersten Gehäuseteil;
- Figur 4: eine Ansicht ähnlich Figur 2 einer Variante der dort gezeigten Vorrichtung;
- Figur 5: eine Ansicht ähnlich Figur 2 eines zweiten Vergleichsbeispiels einer Antriebseinrichtung;
- Figur 6: eine Ansicht ähnlich Figur 3 des zweiten Vergleichsbeispiels;
- Figur 7: eine Ansicht ähnlich Figur 2 einer Variante des zweiten Vergleichsbeispiels;
- Figur 8: einen Längsschnitt der Motorbaugruppe einer Ausführungsform einer erfindungsgemäßen Antriebseinrichtung;
- Figur 9: eine Perspektivansicht eines Ausgleichselements, wie es bei der Ausführungsform zum Einsatz kommt;
- Figur 10: eine Perspektivansicht der Motorbaugruppe gemäß Figur 8; und
- Figur 11: eine Perspektivansicht eines der Lagerelemente der Motorbau-gruppe der Ausführungsform.

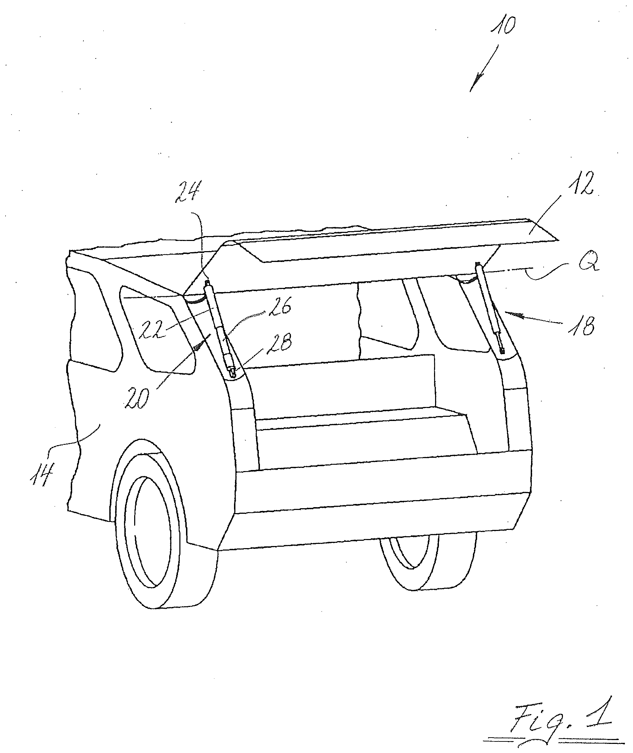

In Figur 1 ist das Heck eines Fahrzeugs 10 dargestellt. Eine an dem Fahrzeug 10 um eine Querachse Q schwenkbar angelenkte Heckklappe 12 des Fahrzeugs 10 ist in ihrem geöffneten Zustand gezeigt und gibt so den Blick auf zwei Antriebseinrichtungen 18 und 20 frei. Die Antriebseinrichtung 18 kann beispielsweise von einer Gasfeder gebildet sein, während die Antriebseinrichtung 20 eine zwischen einem verkürzten Zustand und einem verlängerten Zustand motorisch verstellbare Antriebseinrichtung ist.

Insbesondere die Antriebseinrichtung 20 ist dazu vorgesehen, die Heckklappe 12 zwischen einem geschlossenen Zustand und dem in Figur 1 dargestellten, geöffneten Zustand zu verstellen, wobei die Heckklappe 12 gewünschtenfalls auch Zwischenpositionen zwischen diesen beiden Stellungen einnehmen kann. Die Antriebseinrichtung 20 umfasst hierzu ein erstes Gehäuseteil 22, das über ein Anschlussteil 24 an der Heckklappe 12 angelenkt ist, und ein in dem ersten Gehäuseteil 22 teleskopisch geführtes zweites Gehäuseteil 26, das über ein Anschlussteil 28 an der Karosserie 14 des Fahrzeugs 10 angelenkt ist. Im Sinne der Ansprüche bildet die Heckklappe 12 das bewegbare Bauteil und die Karosserie 14 das feststehende Basisteil.

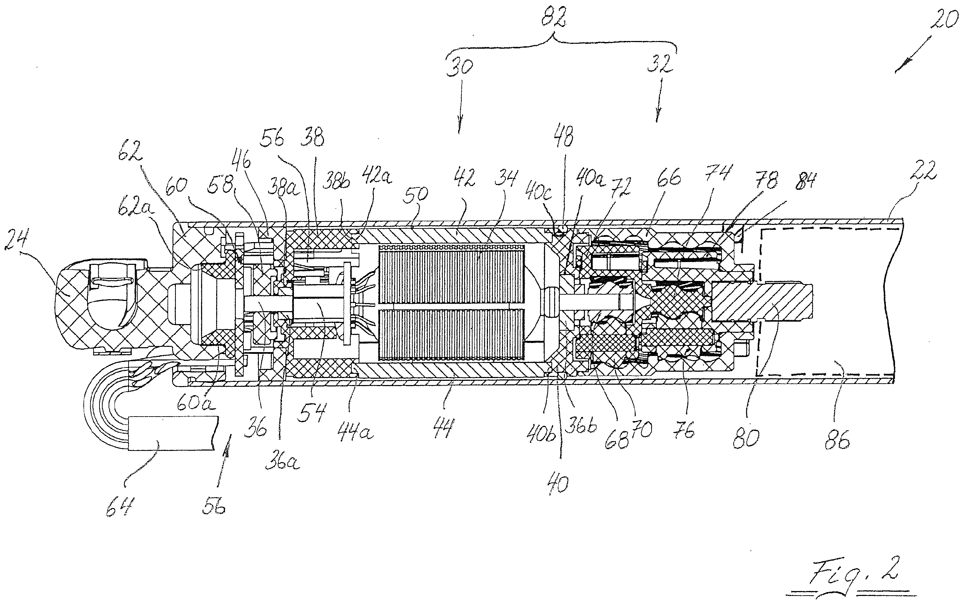

In Figur 2 ist ein erstes Vergleichsbeispiel einer Antriebseinrichtung 20 im Detail dargestellt.

Man erkennt in Figur 2 den als Anker der Motorbaugruppe 30 ausgebildeten Rotor 34, dessen Rotorwelle 36 in zwei Lagerelementen 38 und 40 drehbar gelagert ist, und zwar über Drehlager 36a und 36b, die in zugehörigen Ausnehmungen 38a und 40a der Lagerelemente 38, 40 aufgenommen sind. Die Lagerelemente 38 und 40 dienen ferner zum Haltern der beiden Permanentmagnetschalen 42 und 44 der Motorbaugruppe 30. Die Permanenmagnetschalen 42, 44 sind hierzu mit axialen Vorsprüngen 42a, 44a ausgebildet, die in Ausnehmungen 38b bzw. 40b der Lagerelemente 38, 40 eingreifen. Die Ausnehmungen 38b, 40b haltern die Permanentmagnetschalen 42, 44 dabei auch in radialer Richtung, so dass der Rotor 34, die Lagerelemente 38 und 40 und die beiden Permanentmagnetschalen 42 und 44 eine vormontierte Motorbaugruppe 30 bilden. Diese Motorbaugruppe 30 bildet aber erst dann einen funktionsfähigen Elektromotor, wenn sie in dem, beispielsweise als Stahlrohr gefertigte, erste Gehäuseteil 22 angeordnet ist, das die Funktion des magnetischen Rückschlussteils übernimmt.

Um insbesondere bei vibrationsanfälligen Anwendungen der Entwicklung von Geräuschen vorbeugen zu können, die dadurch entstehen, dass die Motorbaugruppe 30 innen gegen das erste Gehäuseteil 22 schlägt, ist beiden Lagerelementen 38 und 40 jeweils ein Dämpfungselement 46 bzw. 48 zugeordnet. Das Dämpfungselement 46, das dem dem Anschlussteil 24 nächstgelegenen Lagerelement 38 zugeordnet ist, ist als Scheibe ausgebildet, die vorzugsweise aus einem gummielastischen Material, beispielsweise Gummi, gefertigt ist und sich stirnseitig gegen das Lagerelement 38 anlegt. Demgegenüber ist das dem anderen Lagerelement 40 zugeordnete Dämpfungselement 48 als O-Ring ausgebildet, der in eine Umfangsnut 40c des Lagerelements 40 eingelegt ist. Auch der O-Ring 48 ist vorzugsweise aus einem gummielastischen Material, beispielsweise Gummi, gefertigt. Ferner sind der Außendurchmesser der Lagerelemente 38, 40 und der Permanentmagnetschalen 42, 44 im montierten Zustand der Motorbaugruppe 30 und der Innendurchmesser des ersten Gehäuseteils 22 derart aufeinander abgestimmt, dass zwischen der Motorbaugruppe 30 und dem ersten Gehäuseteil 22 ein Luftspalt 50 einer vorbestimmten Größe verbleibt. Die Dämpfungselemente 46, 48 lassen somit eine gewisse Bewegung der Motorbaugruppe 30 in dem ersten Gehäuseteil 22 zu, ohne dass es zu einem geräuschentwickelnden Kontakt der beiden kommt und dämpfen zugleich diese Relativbewegung.

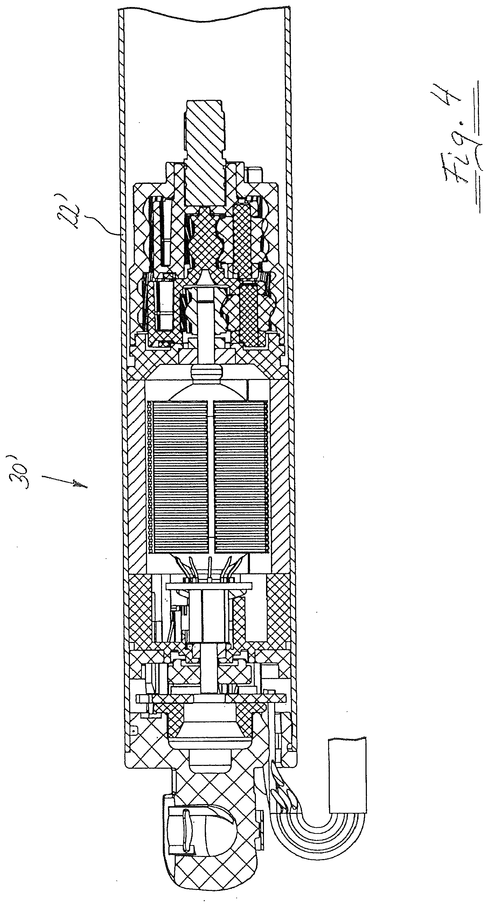

An dieser Stelle sei darauf hingewiesen, dass die Einbußen an Nenndrehmoment, die der Elektromotor durch diesen Luftspalt erleidet, ein tolerierbares Maß nicht übersteigen. Gleichwohl sind auch Ausführungsformen denkbar, bei denen die Motorbaugruppe 30' mit enger Toleranz in das erste Gehäuseteil 22' eingesetzt ist, so dass zwischen beiden kein entsprechender Luftspalt vorhanden ist. Ein derart modifiziertes Vergleichsbeispiel ist in Figur 4 dargestellt. Die Vorrichtung eignet sich beispielsweise für wenig vibrationsanfällige Anwendungen und verfügt bei ansonsten gleichen Abmessungen über ein höheres Nenndrehmoment.

Zu erwähnen ist im Zusammenhang mit der Motorbaugruppe 30 ferner, dass in dem dem Anschlussteil 24 nächstgelegenen Lagerelement 38 auch die Bürsten-Kommutator-Anordnung 52 aufgenommen ist und erforderlichenfalls zudem eine Entstörungsanordnung 54 vorgesehen sein kann.

Zu erwähnen ist ferner, dass der Motorbaugruppe 30 zur Erfassung des Drehsinns des Rotors 34 oder/und zur Erfassung der jeweiligen Drehstellung des Rotors 34 oder/und zur Erfassung der Anzahl der bereits ausgeführten Umdrehungen des Rotors 34 jeweils relativ zum ersten Gehäuseteil 22 eine Sensoreinheit 56 zugeordnet sein kann mit einer rotorfesten Sensoruntereinheit 58, die beispielsweise von einem Hallmagneten gebildet ist, und einer statorfesten Sensoruntereinheit 60, die beispielsweise von einer Hallplatine mit wenigstens einer Hallsonde gebildet ist. Wie in Figur 2 dargestellt ist, kann die statorfeste Sensoruntereinheit 60 mittels eines Ansatzes 60a in einer Ausnehmung 62a eines Gehäusedeckels 62 zentriert sein.

In Figur 2 erkennt man ferner einen Leitungssatz 64, der nicht nur die Leitungen zur Sensoreinheit 56, sondern auch die Versorgungsleitungen für die Motorbaugruppe 30 beinhaltet.

Wie man aus Figur 2 ersieht, umfasst die Getriebebaugruppe 32 ein Gehäuse 66, in dem die Komponenten eines zweistufigen Planetengetriebes aufgenommen sind, nämlich das Sonnenrad bzw. Eingangsritzel 68 der ersten Stufe, die Planetenräder 70 der ersten Stufe, der Planetenträger 72 der ersten Stufe, der mit dem Sonnenrad bzw. Eingangsritzel 74 der zweiten Stufe einstückig ausgebildet ist, die Planetenräder 76 der zweiten Stufe und der Planetenträger 78 der zweiten Stufe, der mit dem Ausgangsritzel 80 der Getriebebaugruppe einstückig ausgebildet ist. Das Gehäuse 66 bildet zudem die Hohlräder beider Stufen der Getriebebaugruppe 32. Die Getriebebaugruppe 32 verfügt jedoch nicht über einen gesonderten Gehäusedeckel. Diese Funktion wird vielmehr von dem vom Anschlussstück 24 entfernten Lagerelement 40 der Motorbaugruppe 30 mit übernommen.

Nach der Vormontage der Motorbaugruppe 30 kann als nächstes die Getriebebaugruppe 32 vormontiert werden, wobei der letzte Montageschritt in dem Aufsetzen der Motorbaugruppe 30 als Gehäusedeckel auf die Getriebebaugruppe 32 besteht. Die Motorbaugruppe 30 und die Getriebebaugruppe 32 bilden in diesem Zustand zusammen eine Antriebseinheit 82 der Antriebseinrichtung 20.

Um das Zusammenfügen von Motorbaugruppe 30 und Getriebebaugruppe 32 erleichtern zu können, kann das Eingangsritzel 68 der Getriebebaugruppe 32 in einem ersten Schritt der Montage der Motorbaugruppe 30 auf der Welle 36 des Rotors 34 befestigt werden. Um später das Lagerelement 40 auf die Rotowelle 36 aufsetzen zu können, muss allerdings der Innendurchmesser der Ausnehmung 40a geringfügig größer bemessen sein als der Außendurchmesser des Eingangsritzels 68.

Grundsätzlich ist es denkbar, auch der Getriebebaugruppe 32 ein gesondertes Dämpfungselement zuzuordnen, beispielsweise an deren von der Motorbaugruppe 30 entferntem Ende, wie dies in Figur 2 bei 84 grobschematisch angedeutet ist. Dieses Dämpfungselement 84 kann gemäß einer ersten Variante scheiben- bzw. topfförmig ausgbildet sein. Es ist jedoch auch möglich, es als O-Ring auszubilden, der in einer Umfangsnut des Getriebegehäuses 66 aufgenommen ist. Bevorzugt kommt für das Dämpfungselement 84 wiederum ein gummielastisches Material zu Einsatz, beispielsweise Gummi. Gewünschtenfalls kann dann, wenn man das Dämpfungselement 84 vorsieht, das Dämpfungselement 48 entfallen.

Nachzutragen ist noch, dass sich in Abtriebsrichtung an die Gewindebaugruppe 32 eine Stellbaugruppe 86 der Antriebseinrichtung 20 anschließt, die beispielsweise von einem an sich bekannten und in Figur 2 daher lediglich gestrichelt angedeuteten Spindeltrieb gebildet sein kann. Die Stellbaugruppe 86 greift die durch die Getriebebaugruppe 32 untersetzte Drehbewegung des Rotors 34 der Motorbaugruppe 30 vom Ausgangsritzel 80 der Getriebebaugruppe 32 ab und leitet hieraus die Relativverlagerungsbewegung von erstem Gehäuseteil 22 und zweitem Gehäuseteil 24 ab.

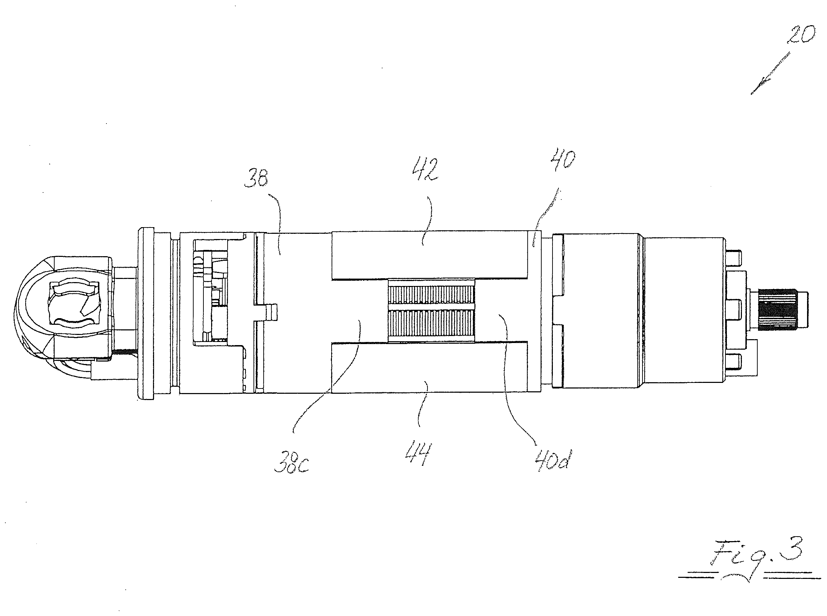

In der Darstellung der Figur 3 erkennt man, dass die Lagerelemente 38 und 40 axiale Vorsprünge 38c und 40d aufweisen, die sich zwischen die Permanentmagnetschalen 42, 44 hineinerstrecken und diese in Umfangsrichtung voneinander beabstandet in ihrer jeweiligen Betriebsstellung halten.

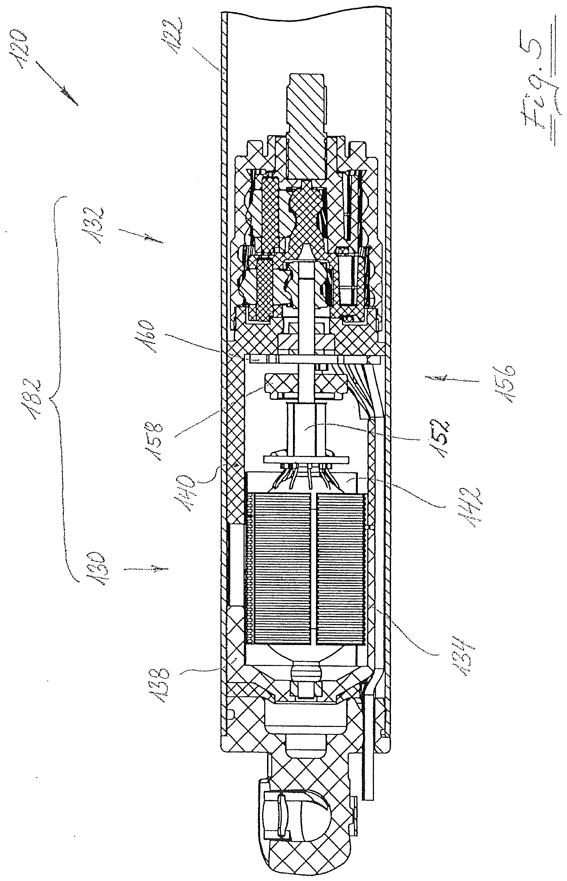

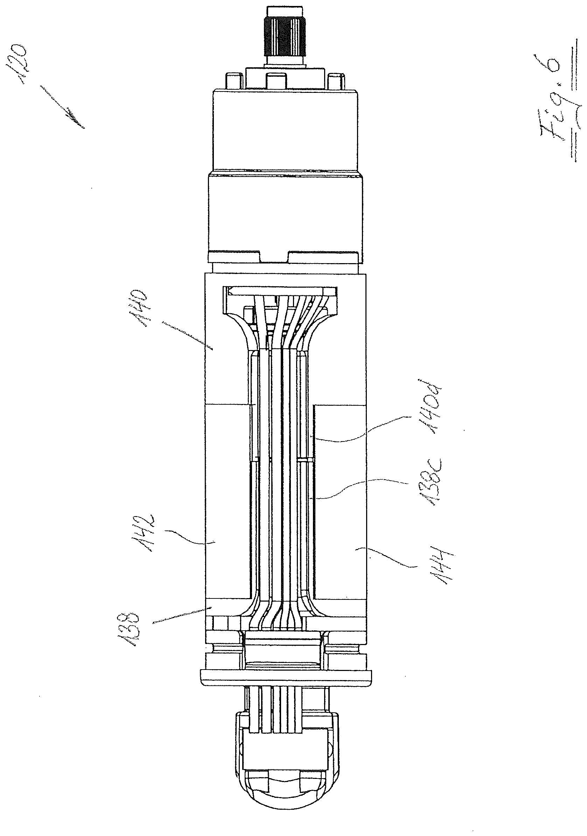

In den Figuren 5 und 6 ist ein zweites Vergleichsbeispiel einer Antriebsvorrichtung dargestellt, die im Wesentlichen der Vorrichtung gemäß Figuren 2 und 3 entspricht. Analoge Teile sind daher mit den gleichen Bezugzeichen versehen wie in den Figuren 2 und 3, jedoch vermehrt um die Zahl 100. Darüber hinaus wird die Antriebseinrichtung 120 gemäß Figuren 5 und 6 im Folgenden nur insoweit beschrieben werden, als sie sich von der Antriebseinrichtung 20 der Figuren 2 und 3 unterscheidet, auf deren Beschreibung hiermit ansonsten ausdrücklich verwiesen sei.

Die Antriebseinrichtung 120 gemäß Figuren 5 und 6 unterscheidet sich von der Antriebseinrichtung 20 der Figuren 2 und 3 zum einen dadurch, dass die Sensoreinheit 156 mit der rotorfesten Sensoruntereinheit 158 und der statorfesten Sensoruntereinheit 160 zwischen der Motorbaugruppe 130 und der Getriebebaugruppe 132 angeordnet ist. Hierdurch kann die Antriebseinheit 182 zwar nicht notwendigerweise kürzer ausgebildet werden, jedoch erleichtert es die Anordnung der Leitungen im Inneren der Antriebseinrichtung 120:
Wie man in Figur 2 erkennt, steht für die Leitungen, die von Lötstellen auf der Platine der statorfesten Sensoruntereinheit 60 ausgehen nur wenig Bauraum zur Verfügung, um sie einerseits in die gewünschte Richtung umlenken und für sie andererseits die erforderliche Zugentlastung bereitstellen zu können. Dieses Problem stellt sich umso mehr, als das Lotmaterial die Leitungsdrähte beim Festlöten der Leitungen an der Platine nicht nur an der Lötstelle benetzt, sondern aufgrund die Drähte von Kapillarkräften über eine gewisse Distanz von der Lötstelle weg benetzt. Nach dem Erkalten versteift dieses Lotmaterial die Drähte, was sie nicht nur weniger flexibel, sondern auch bruchanfälliger macht.

Dieses Problem tritt bei der Vorrichtung der Figuren 5 und 6 nicht auf, da die Leitungen über eine größere Weglänge in der Antriebseinrichtung 120 geführt sind. Daher kann ausreichend Abstand von den Lötstellen gehalten werden, bevor die Leitungen in die gewünschte Richtung umgelenkt werden. Ferner steht ausreichend Leitungslänge zur Verfügung, um für die geforderte Zugentlastung zu sorgen.

Zudem braucht für die zusätzlichen Leitungsabschnitte, die innerhalb des ersten Gehäuseteils 122 verlaufen kein zusätzlicher radialer Bauraum vorgesehen zu werden. Die Leitungen können in einfacher Weise dort verlegt werden, wo die axialen Vorsprünge 138c und 140d der Lagerelemente 138 und 140 zwischen die Permanentmagnetschalen 142, 144 hineinragen (siehe auch Figur 6). Die axialen Vorsprünge 138c und 140d verfügen dort nicht über die gleiche radiale Dicke wie die Permanentmagnetschalen 142, 144, sondern stellen lediglich eine Schutzabdeckung bereit, die sicherstellt, dass die Leitungen nicht mit dem Rotor 134 in Kontakt treten können. Hierzu erstrecken sie sich vorteilhafterweise so weit zwischen die Permanentmagnetschalen 142, 144 hinein, dass sie stirnseitig nahezu aneinander anliegen.

Die Antriebseinrichtung 120 gemäß Figuren 5 und 6 unterscheidet sich von der Antriebseinrichtung 20 der Figuren 2 und 3 zum anderen aber auch dadurch, dass der Rotor 134 umgekehrt orientiert in dem ersten Gehäuseteil 122 aufgenommen ist, d.h. seine Bürsten-Kommutator-Anorndung 152 ist auf seiner der Getriebebaugruppe 132 zugewandten Seite angeordnet. Auch hierdurch kann zwar keine Baulänge eingespart werden. Hinsichtlich der zu den Bürsten (die man in Figur 5 aufgrund der Wahl der Schnittansicht nicht) führenden Versorgungsleitungen gelten jedoch die gleichen Überlegungen wie für die zur statorfesten Sensoruntereinheit 160 führenden Leitungen.

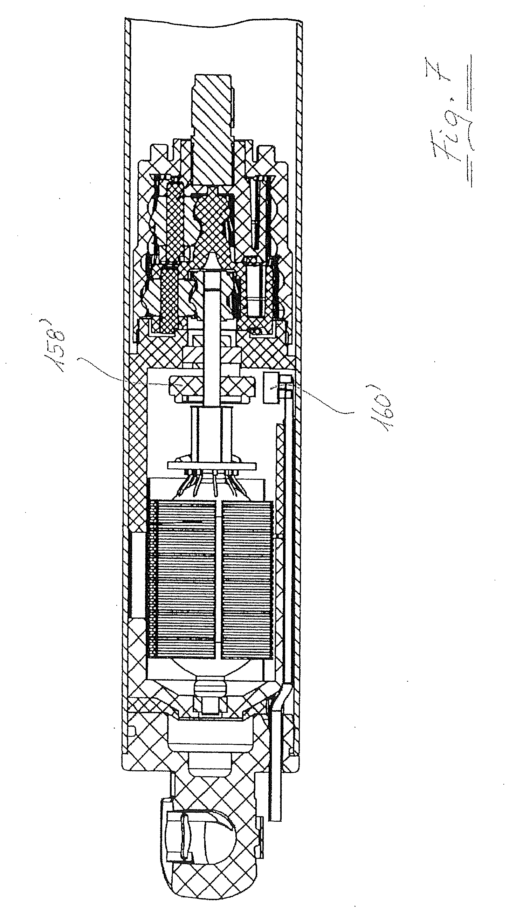

Wie man Figur 7 entnehmen kann, die eine Abwandlung der Vorrichtung der Figuren 5 und 6 darstellt, kann jedoch eine gewisse Baulänge eingespart werden, wenn man die statorfeste Sensoruntereinheit 160' radial außerhalb der rotorfesten Sensoruntereinheit 158' anordnet.

Festzuhalten ist, dass auch Ausführungsformen denkbar sind, bei denen lediglich die Sensoreinheit oder lediglich die Bürsten-Kommutator-Anordnung auf der der Getriebebaugruppe zugewandten Seite der Motorbaugruppe angeordnet ist.

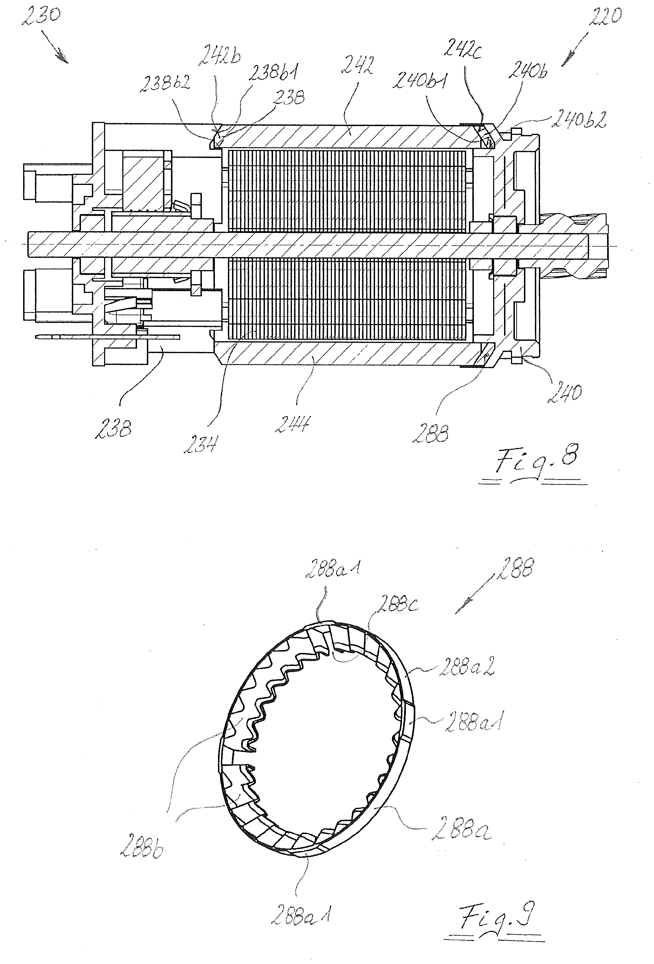

In den Figuren 8 bis 11 ist eine Ausführungsform einer erfindungsgemäßen Antriebsvorrichtung dargestellt, die im Wesentlichen der Vorrichtung gemäß Figuren 2 und 3 entspricht. Analoge Teile sind daher mit den gleichen Bezugzeichen versehen wie in den Figuren 2 und 3, jedoch vermehrt um die Zahl 200. Darüber hinaus wird die Antriebseinrichtung 220 gemäß Figuren 8 bis 11 im Folgenden nur insoweit beschrieben werden, als sie sich von der Antriebseinrichtung 20 der Figuren 2 und 3 unterscheidet, auf deren Beschreibung hiermit ansonsten ausdrücklich verwiesen sei.

Genauer gesagt ist in Figur 8 die Motorbaugruppe 230 der Antriebseinrichtung 220 dargestellt.

Ein erster Unterschied zur Motorbaugruppe 30 gemäß Figur 2 besteht darin, dass die Ausnehmungen 238b, 240b der Lagerelemente 238, 240 keilförmig ausgebildet sind und insbesondere nach radial außen hin eine keilförmige Begrenzungsfläche 238b1, 240b1 aufweisen. Während die Keilfläche 238b1 unmittelbar an einer Gegenkeilfläche 242c einer Permanentmagnetschale 242 anliegt, liegt die Keilfläche 240b1 nur mittelbar, und zwar unter Vermittelung eines Ausgleichselements 288, auf das nachstehend noch detailliert eingegangen werden wird, an der Gegenkeilfläche 242c der Permanentmagnetschale 242 an. Die Radiallage der Permanentmagnetschale 242 ist durch ihre Auflage auf Stützflächen 238b2, 240b2 der Ausnehmungen 238b, 240b festgelegt. Analoge Gegenkeilflächen können auch an der anderen Permanentmagnetschale 244 vorgesehen sein.

Den zweiten Unterschied zur Motorbaugruppe 30 gemäß Figur 2 bildet das vorstehend erwähnte Ausgleichselement 288. Eine Funktion des Ausgleichselements 288 besteht darin, für einen axialen Längenausgleich zwischen dem Abstand der Lagerelemente 238, 240 und der Länge der Permanentmagnetschale 242, die aufgrund von Fertigungstoleranzen voneinander abweichen können, zu schaffen. Hiezu ist das Ausgleichselement 288 in axialer Richtung komprimierbar ausgebildet.

Gemäß dem in Figur 9 dargestellten Ausführungbeispiel ist das Ausgleichselement 288 ringförmig ausgebildet mit einem sich über den gesamten Umfang erstreckenden Ringkörper 288a und einer Mehrzahl von im dargestellten Ausführungsbeispiel vier wellenförmigen Abschnitten 288b, die an der Innenseite des Ringkörpers 288a ausgeformt sind und die Komprimierbarkeit des Ausgleichselements 288 bereitstellen.

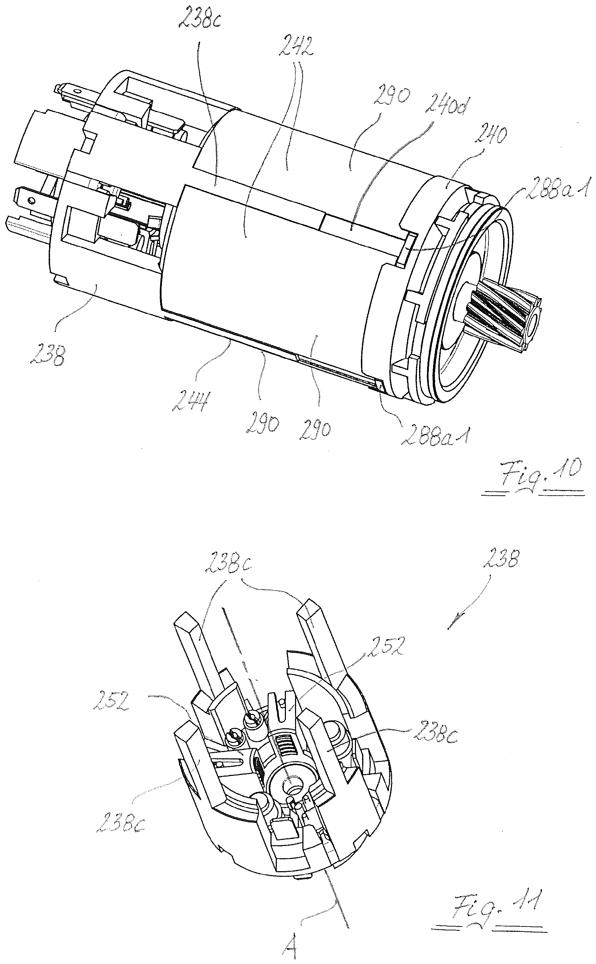

Ein dritter Unterschied besteht darin, dass die beiden sich jeweils über einen Umfangswinkel von annähernd 180° erstreckenden Permanentmagnetschalen 242, 244, wie in Figur 10 erkennbar ist, nicht einstückig ausgebildet sind, sondern jeweils zwei Permanentmagnetelemente 290 aufweisen, die sich über einen Umfangswinkel von annähernd 90° erstrecken. Dabei sind sowohl die beiden Permanentmagnetschalen 242, 244 als auch die beiden Permanentelemente 290 einer Permanentmagnetschale 242, 244 durch Vorsprünge 238c, 240d der Lagerelemente 238, 240 voneinander getrennt. Man könnte in der Darstellung auch vollends darauf verzichten, auf die Permanentmagnetschalen 242, 244 Bezug zu nehmen, da es für die Funktionsfähigkeit des Elektromotors, wie der Elektromotorfachmann weiß, letztenendes lediglich darauf ankommt, dass der Rotor 234 (siehe Figur 8) über im Wesentlichen seinen gesamten Umfang von Permanentmagnetmaterial umgeben ist, was im vorliegenden Fall durch die vier Permanentmagnetelemente 290 gewährleistet ist.

In Figur 10 erkennt man ferner zwei Umfangsabschnitte 288a1 des Ringkörpers 288a des Ausgleichselements 288, mit denen dieses in radialer Richtung über das Lagerelement 240 hervorsteht. Gemäß Figur 8 sind zwei in Umfangsrichtung benachbarte derartige Umfangsabschnitte 288a1 durch einen weiteren Umfangsabschnitt 288a2 des Ringkörpers 288a verbunden. Die wellenförmigen Abschnitte 288b sind an der Innenseite der weiteren Umfangsabschnitte 288a2 ausgebildet, während an der Innenseite der radial hervorstehenden Umfangsabschnitte 288a1 Lücken 288c vorhanden sind, durch die im montierten Zustand die Vorsprünge 240d des Lagerelements 240 hindurchtreten. Hierdurch ist das Ausgleichselement 288 am Lagerelement 240 gesichert, so dass die in radialer Richtung hervorstehenden Umfangsabschnitte 288a1 zur Zentrierung des Lagerelements 240 und somit des gesamten Rotor 234 im ersten Gehäuseteil dienen können.

Ein vierter Unterschied ist in Figur 11 dargestellt. Und zwar schließen die Richtungen, gemäß denen die Bürsten 252a der Bürsten-Kommutator-Anordnung zur Achse A orientiert sind, einen Winkel ein, der im Wesentlichen 90° beträgt. Entsprechend sind der Kommutator der Bürsten-Kommutator-Anordnung und der Rotor 234 sechspolig ausgebildet.

Festzuhalten ist, dass die vorstehend erläuterten vier Unterschiede voneinander vollkommen unabhängig sind. So könnte ein Ausgleichselement auch dann mit Vorteil eingesetzt werden, wenn die Permanentmagnetschalen bzw. die Permanentmagnetelemente und die Lagerelemente nicht mit zusammenwirkenden Keilflächen ausgebildet sind, sondern beispielsweise gestuft, wie in Figur 2 dargestellt, oder gar mit durchgehenden orthogonal zur Drehachse verlaufenden Stirnflächen.

Ferner kann auch dann, wenn die beiden Permanentmagnetschalen jeweils einstückig ausgebildet sind, ein derartiges Ausgleichselement oder/und die Keilform der zusammenwirkenden Stirnflächen mit Vorteil eingesetzt werden.

Auch die 90°-Anordnung der Bürsten und die sechs-polige Ausbildung von Kommutator und Rotor kann ebenso bei der ersten oder/und der zweiten Ausführungsform eingesetzt werden.

## Patentansprüche

1. Antriebseinrichtung (20; 120), umfassend:
• ein erstes Gehäuseteil (22; 122) mit einer Achse, das mit einem feststehenden Basisteil oder mit einem bewegbaren Bauteil (12) verbindbar ist,
• ein zum ersten Gehäuseteil (22; 122) im Wesentlichen koaxial angeordnetes zweites Gehäuseteil (26), das mit dem jeweils anderen Teil, d.h. dem bewegbaren Bauteil oder dem feststehenden Basisteil (14), verbindbar ist und das am ersten Gehäuseteil (22;122) mittelbar oder unmittelbar in Achsrichtung relativ zu diesem verlagerbar geführt ist, und
• eine in dem ersten Gehäuseteil (22; 122) aufgenommene Antriebseinheit (82; 182) mit einer Motorbaugruppe (30; 130) zur Herbeiführung einer Relativverlagerungsbewegung des ersten Gehäuseteils (22; 122) und des zweiten Gehäuseteils (26),
wobei die Motorbaugruppe (30; 130) einen Rotor (34; 134) mit einer Rotorwelle (36), zwei Lagerelemente (38, 40; 138, 140) zur Lagerung der beiden Enden der Rotorwelle (36) und zwei an den Lagerelementen (38, 40; 138, 140) gehaltene Permanentmagnetschalen (42, 44; 142, 144) aufweist,
wobei die von dem Rotor (34; 134), den beiden Lagerelementen (38, 40; 138, 140) und den beiden Permanentmagnetschalen (42, 44; 142, 144) gebildete Einheit unmittelbar in dem ersten Gehäuseteil (22; 122) aufgenommen ist, und dass das erste Gehäuseteil (22; 122) zumindest in einem der Motorbaugruppe (30; 130) zugeordneten Längenabschnitt aus einem magnetisierbaren Material gefertigt ist, wobei wenigstens eines der Lagerelemente (38, 40) wenigstens einen Haltevorsprung (die Halteausnehmungen 38b, 40b begrenzender Vorsprung) für wenigstens eine der Permanentmagnetschalen (42, 44) aufweist,
**dadurch gekennzeichnet, dass** eine Keilfläche (238b1, 240b1) des wenigstens einen Haltevorsprungs (238b, 240b) mit einer zugeordneten Gegenkeilfläche (242b, 242c) der wenigstens einen Permanentmagnetschale (242, 244) zusammenwirkt, die sich vorzugsweise über einen an die Außenfläche der wenigstens einen Permanentmagnetschale (242) angrenzenden Höhenabschnitt der Permanentmagnetschale (242) erstreckt, wobei sich vorzugsweise sowohl die Keilfläche (238b1, 240b1) als auch die Gegenkeilfläche (242b, 242c) in einer auf das jeweils andere axiale Längsende der wenigstens einen Permanentmagnetschale (242) zu weisenden Richtung zunehmend nach radial außen erstrecken.

2. Antriebseinrichtung nach Anspruch 1,
**dadurch gekennzeichnet, dass** wenigstens eines der Lagerelemente (38, 40) wenigstens einen axialen Ansatz (38c, 40d) aufweist, der zwischen die Permanentmagnetschalen(42, 44) hineinragt.

3. Antriebseinrichtung nach einem der Ansprüche 1 und 2,
dass an wenigstens einem axialen Längsende der wenigstens einen Permanentmagnetschale (242) zwischen der Permanentmagnetschale (242) und dem Lagerelement (240) ein in axialer Richtung elastisch komprimierbares Ausgleichselement (288) vorgesehen ist.

4. Antriebseinrichtung nach Anspruch 3,
**dadurch gekennzeichnet, dass** das Ausgleichselement (288) als sich über den gesamten Umfang erstreckender Ring (288a) ausgebildet ist,
wobei es vorzugsweise wenigstens einen wellenförmigen Abschnitt (288b) umfasst, der beispielsweise auf der Innenseite des Rings (288a) angeordnet sein, und
wobei weiter vorzugsweise zwei benachbarte wellenförmige Abschnitte (288b) des Ausgleichselements (288) mittels eines Umfangsabschnitts (288a1) des Rings (288a) verbunden sind, der in radialer Richtung über an ihn angrenzende Umfangsabschnitte (288a2) des Rings (288a) hervorsteht.

5. Antriebseinrichtung (20; 120) nach einem der Ansprüche 1 bis 4, wobei die Antriebseinheit (82; 182) ferner eine Getriebebaugruppe (32; 132) aufweist, welche mit der Abtriebsseite der Motorbaugruppe (30; 130) verbunden ist, wobei von einer Drehbewegung der Ausgangswelle der Getriebebaugruppe (32; 132) die Relativverlagerungsbewegung von erstem Gehäuseteil (22; 122) und zweitem Gehäuseteil (26) abgeleitet wird,
**dadurch gekennzeichnet, dass** das der Getriebebaugruppe (32; 132) nächstgelegene Lagerelement (40; 140) der Motorbaugruppe (30; 130) gleichzeitig den Gehäusedeckel der Getriebebaugruppe (32; 132) bildet.

6. Antriebseinrichtung nach Anspruch 5,
**dadurch gekennzeichnet, dass** der Innendurchmesser einer zur Durchführung der Rotorwelle (36) dienenden zentralen Öffnung (40a) des der Getriebebaugruppe (32) nächstgelegenen Lagerelements (40) zumindest gleich groß bemessen ist wie der Außendurchmesser eines Eingangsritzels (68) der Getriebebaugruppe (32).

7. Antriebseinrichtung nach einem der Ansprüche 1 bis 6,
**dadurch gekennzeichnet, dass** wenigstens einem Lagerelement (38, 40) ein Dämpfungselement (46, 48) zugeordnet ist.

8. Antriebseinrichtung nach einem der Ansprüche 5 bis 7,
**dadurch gekennzeichnet, dass** an dem von der Motorbaugruppe (30) entfernten Ende der Getriebebaugruppe (32) ein Dämpfungselement (84) vorgesehen ist.

9. Antriebseinrichtung nach einem der Ansprüche 5 bis 8,
**dadurch gekennzeichnet, dass** die Motorbaugruppe (30) ferner eine Sensoreinheit (56) umfasst mit einer rotorfesten Sensoruntereinheit (58) und einer statorfesten Sensoruntereinheit (60),
wobei die Sensoreinheit (56) vorzugsweise an dem von der Getriebebaugruppe (32) abgewandten Ende der Motorbaugruppe (30) angeordnet ist.

10. Antriebseinrichtung nach Anspruch 9, wobei die Antriebseinheit (182) ferner eine Getriebebaugruppe (132) aufweist, welche mit der Abtriebsseite der Motorbaugruppe (130) verbunden ist, wobei von einer Drehbewegung der Ausgangswelle der Getriebebaugruppe (132) die Relativverlagerungsbewegung von erstem Gehäuseteil (122) und zweitem Gehäuseteil abgeleitet wird,
**dadurch gekennzeichnet, dass** die Sensoreinheit (156) zwischen der Motorbaugruppe (130) und der Getriebebaugruppe (132) angeordnet ist.

11. Antriebseinrichtung nach Anspruch 9 oder 10,
**dadurch gekennzeichnet, dass** die statorfeste Sensoruntereinheit (160') radial außerhalb der rotorfesten Sensoruntereinheit (158') oder/und in einer axialen Ausnehmung eines der Lagerelemente angeordnet ist.

12. Antriebseinrichtung nach einem der Ansprüche 5 bis 11,
**dadurch gekennzeichnet, dass** die Bürsten-Kommutator-Anordnung (152) auf der der Getriebebaugruppe (132) zugewandten Seite der Motorbaugruppe (130) angeordnet ist.

13. Antriebseinrichtung nach einem der Ansprüche 1 bis 12,
**dadurch gekennzeichnet, dass** wenigstens eine der Permanentmagnetschalen (242, 244) wenigstens zwei Permanentmagnetelemente (290) umfasst, die beispielsweise getrennt voneinander an den Lagerelementen (238, 240) gehalten sind.

## Claims

1. Drive device (20; 120) comprising:
• a first housing part (22; 122) having an axis, which housing part can be connected to a stationary base part or to a movable component (12),
• a second housing part (26) which is arranged substantially coaxially with respect to the first housing part (22; 122) and can be connected to the other part in each case, i.e. the movable component or the stationary base part (14), and is guided on the first housing part (22; 122) indirectly or directly in the axial direction so as to be displaceable relative thereto, and
• a drive unit (82; 182) which is received in the first housing part (22; 122) and has a motor assembly (30; 130) for bringing about a relative displacement movement of the first housing part (22; 122) and the second housing part (26),
the motor assembly (30; 130) having a rotor (34; 134), which has a rotor shaft (36), two bearing elements (38, 40; 138, 140) for supporting the two ends of the rotor shaft (36), and two permanent magnet shells (42, 44; 142, 144) held on the bearing elements (38; 40; 138, 140),
the unit formed by the rotor (34; 134),the two bearing elements (38, 40; 138, 140) and the two permanent magnet shells (42, 44; 142, 144) being received directly in the first housing part (22; 122), and the first housing part (22; 122), at least in a longitudinal portion associated with the motor assembly (30; 130), being made of a magnetisable material, at least one of the bearing elements (38, 40) having at least one retaining projection (projection defining the retaining recesses 38b, 40b) for at least one of the permanent magnet shells (42, 44),
**characterised in that** a wedge surface (238b1, 240b1) of the at least one retaining projection (238b, 240b) cooperates with an associated counter wedge surface (242b, 242c) of the at least one permanent magnet shell (242, 244), which counter wedge surface preferably extends over a height portion of the permanent magnet shell (242), which portion adjoins the outer surface of the at least one permanent magnet shell (242), the wedge surface (238b1, 240b1) and the counter wedge surface (242b, 242c) preferably extending increasingly radially outwards, in a direction which points towards the other axial longitudinal end of the at least one permanent magnet shell (242) in each case.

2. Drive device according to claim 1, **characterised in that** at least one of the bearing elements (38, 40) has at least one axial shoulder (38c, 40d) which projects between the permanent magnet shells (42, 44).

3. Drive device according to claim 1 or claim 2, that a compensating element (288) which can be elastically compressed in the axial direction is provided between the permanent magnet shell (242) and the bearing element (240) at at least one axial longitudinal end of the at least one permanent magnet shell (242).

4. Drive device according to claim 3, **characterised in that** the compensating element (288) is formed as a ring (288a) which extends over the entire circumference, said element preferably comprising at least one undulating portion (288b), for example arranged on the inner face of the ring (288a), and two adjacent undulating portions (288b) of the compensating element (288) also preferably being connected by a circumferential portion (288a1) of the ring (288a) that protrudes in the radial direction over circumferential portions (288a2) of the ring (288a) that are adjacent to said portion.

5. Drive device (20; 120) according to any of claims 1 to 4, the drive unit (82; 182) further comprising a gear assembly (32; 132) which is connected to the output side of the motor assembly (30; 130), the relative displacement movement of the first housing part (22; 122) and the second housing part (26) being derived from a rotational movement of the output shaft of the gear assembly (32; 132), **characterised in that** the bearing element (40; 140) of the motor assembly (30; 130) that is nearest to the gear assembly (32; 132) simultaneously forms the housing cover of the gear assembly (32; 132).

6. Drive device according to claim 5, **characterised in that** the inner diameter of a central opening (40a) of the bearing element (40) nearest to the gear assembly (32), which opening is used to feed through the rotor shaft (36), is at least the same size as the outer diameter of an input pinion (68) of the gear assembly (32).

7. Drive device according to any of claims 1 to 6, **characterised in that** a damping element (46, 48) is associated with at least one bearing element (38, 40).

8. Drive device according to any of claims 5 to 7, **characterised in that** a damping element (84) is provided at the end of the gear assembly (32) that is further from the motor assembly (30).

9. Drive device according to any of claims 5 to 8, **characterised in that** the motor assembly (30) further comprises a sensor unit (56) having a sensor subunit (58) which is fixed to the rotor and a sensor subunit (60) which is fixed to the stator, the sensor unit (56) preferably being arranged at the end of the motor assembly (30) that is remote from the gear assembly (32).

10. Drive device according to claim 9, the drive unit (182) further comprising a gear assembly (132) which is connected to the output side of the motor assembly (130), the relative displacement movement of the first housing part (122) and the second housing part being derived from a rotational movement of the output shaft of the gear assembly (132), **characterised in that** the sensor unit (156) is arranged between the motor assembly (130) and the gear assembly (132).

11. Drive device according to claim 9 or claim 10, **characterised in that** the sensor subunit (160') fixed to the stator is arranged radially outside the sensor subunit (158') fixed to the rotor and/or in an axial recess of one of the bearing elements.

12. Drive device according to any of claims 5 to 11, **characterised in that** the brush-commutator arrangement (152) is arranged on the side of the motor assembly (130) that faces the gear assembly (132).

13. Drive device according to any of claims 1 to 12, **characterised in that** at least one of the permanent magnet shells (242, 244) comprises at least two permanent magnet elements (290) which, for example, are held separately from one another on the bearing elements (238, 240).

## Revendications

1. Dispositif d'entraînement (20 ; 110), comprenant :
- une première partie de boîtier (22 ; 122) dotée d'un axe, laquelle peut être reliée à une partie de base fixe ou à un composant mobile (12),
- une deuxième partie de boîtier (26) agencée de manière essentiellement coaxiale à la première partie de boîtier (22 ; 122), laquelle peut être reliée à l'autre partie respective, à savoir le composant mobile ou la partie de base fixe (14), et est guidée sur la première partie de boîtier (22 ; 122) de manière déplaçable directement ou indirectement relativement à celle-ci dans la direction axiale, et
- une unité d'entraînement (82; 182) logée dans la première partie de boîtier (22; 122), dotée d'un groupe moteur (30; 130) pour générer un mouvement de déplacement relatif de la première partie de boîtier (22 ; 122) et de la deuxième partie de boîtier (26),
dans lequel le groupe moteur (30 ; 130) comporte un rotor (34; 134) doté d'un arbre de rotor (36), deux éléments porteurs (38, 40; 138, 140) portant les deux extrémités de l'arbre de rotor (36) et deux coquilles d'aimant permanent (42, 44 ; 142, 144) maintenues sur les éléments porteurs (38, 40 ; 138, 140),
dans lequel l'unité formée par le rotor (34; 134), les deux éléments porteurs (38, 40; 138, 140) et les deux coquilles d'aimant permanent (42, 44; 142, 144) est logée directement dans la première partie de boîtier (22; 122), et la première partie de boîtier (22 ; 122) est fabriquée en un matériau aimantable au moins dans une section longitudinale ordonnée au groupe moteur (30; 130), dans lequel au moins un des éléments porteurs (38, 40) comporte au moins une saillie de maintien (saillie limitant les évidements de maintien 38b, 40b) pour au moins une des coquilles d'aimant permanent (42, 44),
**caractérisé en ce qu'**une surface cunéiforme (238b1, 240b1) de l'au moins une saillie de maintien (238b, 240b) coopère avec une contre-surface cunéiforme ordonnée (242b, 242c) de l'au moins une des coquilles d'aimant permanent (242, 244), laquelle s'étend de préférence au-dessus d'une section en hauteur de la coquille d'aimant permanent (242) contiguë à la surface extérieure de l'au moins une coquille d'aimant permanent (242), dans lequel de préférence aussi bien la surface cunéiforme (238b1, 240b1) que la contre-surface cunéiforme (242b, 242c) s'étendent en s'ouvrant radialement vers l'extérieur dans une direction orientée vers l'autre extrémité longitudinale axiale de l'au moins une coquille d'aimant permanent (242).

2. Dispositif d'entraînement selon la revendication 1, **caractérisé en ce qu'**au moins un des éléments porteurs (38, 40) comporte au moins un appendice axial (38c, 40d), lequel s'engage entre les coquilles d'aimant permanent (42, 44).

3. Dispositif d'entraînement selon l'une des revendications 1 et 2, **caractérisé en ce qu'**un élément compensateur (288) élastiquement comprimable dans la direction axiale est prévu à au moins une extrémité longitudinale axiale de l'au moins une coquille d'aimant permanent (242) entre la coquille d'aimant permanent (242) et l'élément porteur (240).

4. Dispositif d'entraînement selon la revendication 3, **caractérisé en ce que** l'élément compensateur (288) est réalisé comme bague (288a) s'étendant sur la totalité du pourtour,
dans lequel il comprend de préférence au moins une section ondulée (288b), laquelle est agencée par exemple sur le côté intérieur de la bague (288a), et
dans lequel, en outre, deux sections ondulées adjacentes (288b) de l'élément compensateur (288) sont de préférence reliées au moyen d'une section de pourtour (288a1) de la bague (288a), laquelle dépasse dans la direction radiale par rapport à la section de pourtour (288a2) adjacente de la bague (288a).

5. Dispositif d'entraînement (20 ; 120) selon l'une des revendications 1 à 4, **caractérisé en ce que** l'unité d'entraînement (82 ; 182) comporte en outre un groupe de transmission (32; 132), lequel est relié au côté de sortie du groupe moteur (30 ; 130), dans lequel le mouvement de déplacement relatif de la première partie de boîtier (22; 122) et de la deuxième partie de boîtier (26) est dérivé d'un mouvement de rotation de l'arbre de sortie du groupe de transmission (32 ; 132),
**caractérisé en ce que** l'élément porteur (40, 140) du groupe moteur (30 ; 130) le plus proche du groupe de transmission (32; 132) forme en même temps le couvercle de boîtier du groupe de transmission (32 ; 132).

6. Dispositif d'entraînement selon la revendication 5,
**caractérisé en ce que** le diamètre intérieur d'une ouverture centrale (40a) de l'élément porteur (40) le plus proche du groupe de transmission (32), servant au passage de l'arbre de rotor (36), est dimensionnée au moins égale au diamètre extérieur d'un pignon d'entrée (68) du groupe de transmission (32).

7. Dispositif d'entraînement selon l'une des revendications 1 à 6,
**caractérisé en ce qu'**un élément amortisseur (46, 48) est ordonné à au moins un élément porteur (38, 40).

8. Dispositif d'entraînement selon l'une des revendications 5 à 7,
**caractérisé en ce qu'**un élément amortisseur (84) est prévu à l'extrémité du groupe de transmission (32) éloignée du groupe moteur (30).

9. Dispositif d'entraînement selon l'une des revendications 5 à 8,
**caractérisé en ce que** le groupe moteur (30) comprend en outre une unité de capteur (56) dotée d'une sous-unité de capteur (58) fixée sur le rotor et d'une sous-unité de capteur (60) fixée sur le stator,
dans lequel l'unité de capteur (56) est de préférence agencée à l'extrémité du groupe moteur (30) se détournant du groupe de transmission (32).

10. Dispositif d'entraînement selon la revendication 9, dans lequel l'unité d'entraînement (182) comporte en outre un groupe de transmission (132), laquelle est reliée au côté de sortie du groupe moteur (130), dans lequel le mouvement de déplacement relatif de la première partie de boîtier (122) et de la deuxième partie de boîtier est dérivé d'un mouvement de rotation de l'arbre de sortie du groupe de transmission (132),
**caractérisé en ce que** l'unité de capteur (156) est agencée entre le groupe moteur (130) et le groupe de transmission (132).

11. Dispositif d'entraînement selon la revendication 9 ou 10,
**caractérisé en ce que** la sous-unité de capteur (160') fixée sur le stator est agencée radialement à l'extérieur de la sous-unité de capteur (158') fixée sur le rotor et/ou dans un évidement axial d'un des éléments porteurs.

12. Dispositif d'entraînement selon l'une des revendications 5 à 11,
**caractérisé en ce que** le système collecteur-balais (152) est agencé sur le côté du groupe moteur (130) faisant face au groupe de transmission (132).

13. Dispositif d'entraînement selon l'une des revendications 1 à 12,
**caractérisé en ce qu'**au moins une des coquilles d'aimant permanent (242, 244) comprend au moins deux éléments d'aimant permanent (290), lesquels sont par exemple maintenus séparés l'un de l'autre sur les éléments porteurs (238, 240).
